Europäisches Patentamt

European Patent Office

Office européen des brevets

(11) Veröffentlichungsnummer: **0 281 506 B1**

(12) **EUROPÄISCHE PATENTSCHRIFT**

(45) Veröffentlichungstag der Patentschrift:
18.12.91 Patentblatt 91/51

(51) Int. Cl.⁵: **F23L 15/00, F24F 7/06**

(21) Anmeldenummer: 88730041.6

(22) Anmeldetag: 22.02.88

(54) **Heizungsanlage mit Vorwärmung der Verbrennungsluft.**

(30) Priorität: 21.02.87 DE 3705996

(43) Veröffentlichungstag der Anmeldung:
07.09.88 Patentblatt 88/36

(45) Bekanntmachung des Hinweises auf die
Patenterteilung:
18.12.91 Patentblatt 91/51

(84) Benannte Vertragsstaaten:
AT CH ES FR GB IT LI NL SE

(56) Entgegenhaltungen:
CH-A- 151 240
US-A- 2 127 095

(73) Patentinhaber: Hahn, Rainer
Wilhelmstrasse 3
W-1000 Berlin 61 (DE)

(72) Erfinder: Hahn, Rainer
Wilhelmstrasse 3
W-1000 Berlin 61 (DE)

(74) Vertreter: Scholz, Hartmut, Dipl.-Ing.
Bundesallee 74
W-1000 Berlin 41 (Friedenau) (DE)

## Beschreibung

Die Erfindung betrifft eine Heizungsanlage, mit einem Heizraum mit einem oder mehreren Heizungskesseln mit Brennern, einer Heizraum-Entlüftungsanlage mit einer Eintrittsöffnung für die Heizraumabluft und einem Abluftaustritt sowie einer Belüftungsanlage mit einem Verbrennungslufteintritt, wobei der Heizraum mit einem Zulufteintritt versehen ist.

Heizungsanlagen, beispielsweise Fernwärme-Heizkraftwerke haben einen hohen Bedarf an Verbrennungsluft für die in den Heizkesseln installierten Brenner. Diese Verbrennungsluft wird üblicherweise durch geeignete Außenluft-Eintrittsöffnungen angesaugt, gefiltert und den Brennern zugeführt.

Aus der CH-A-151 240 ist eine Heizungsanlage mit einer Heizraumentlüftung bekannt, wobei nur der Heizraum mit einem Zulufteintritt versehen ist und nur die in dem Heizraum entstehende Abluft dem Brenner als Verbrennungsluft zugeführt wird. Zweck ist es, eventuell in dem Heizraum angesammelte, übel riechende Heizöldämpfe zu entsorgen und dabei zugleich die Verbrennungsluft zu erwärmen. Die in den Heizraum gelangende Frischluft ist dabei jedoch stets von der benötigten Verbrennungsluft abhängig, und umgekehrt ist die zur Verfügung stehende Verbrennungsluftmenge nicht vom tatsächlichen Bedarf der Brenner sondern von der Abluftmenge der Heizraumentlüftung abhängig.

Bei kleineren Heizungsanlagen, wie sie in der genannten Druckschrift beschrieben sind, mögen die sich hier ergebenden Luftmengenunterschiede vernachlässigbar sein, bei großen Fernheizanlagen jedoch, auf die sich die Erfindung bezieht, führt dies zu nicht regelbaren Schwankungen ; dies führt wiederum zu einem Mehrverbrauch an Brennstoff.

Aus der US-A-2 711 683 ist ferner ein Heizofen bekannt, dessen Heizluftzufuhr durch ein separates, konzentrisch zu dem Rauchgasabzug angeordnetes Rohr geführt und so vorgewärmt wird. Der vorgewärmte Zuluftstrom gelangt dann in den Heizraum. Durch die unmittelbare Nachbarschaft der Lufteintrittsöffnung zu der Rauchgasaustrittsöffnung ist es nicht zu vermeiden, daß mit der Frisch- oder Zuluft auch Rauchgase angesaugt werden. Außerdem ist die Möglichkeit der Wärmeübertragung auf die Länge des Rauchgasabzugs beschränkt.

Aufgabe der vorliegenden Erfindung ist es, eine Heizungsanlage der eingangs beschrieben Art zu schaffen, bei der eine optimale Be- und Entlüftung der Heizräume und eine energiesparende, bedarfsgerechte Verbrennungsluft-Zuführung getrennt von einander regelbar sind.

Gelöst wird diese Aufgabe dadurch, daß der Abluftaustritt der Entlüftungsanlage und ein Außenlufteintritt durch einen gemeinsamen Luftschacht mit dem Verbrennungslufteintritt verbunden sind. Durch diese Maßnahmen wird eine Heizungsanlage geschaffen, bei der die Verbrennungsluft nur teilweise aus dem Abluftstrom des Heizraums gespeist wird. Ein weiterer Teil der tatsächlich benötigten Verbrennungsluft kann als Frischluft angesaugt werden. In dem gemeinsamen Luftschacht wird die kalte Frischluft mit der warmen HeizraumAbluft zu vorgewärmter Verbrennungsluft vermengt. Der Heizraum wird durch einen separaten, von der Austrittsöffnung der Abluft entfernt liegenden Zulufteintritt mit eigener Frischluft versorgt.

Durch den Frischlufteintritt des gemeinsamen Luftschachtes kann eine von den Brennern eventuell benötigte, zusätzliche Frischluftmenge angesaugt werden. Die für den Verbrennungsluftstrom benötigte Frischluftmenge kann unabhängig von der im Heizraum benötigten Frischluftmenge und dem tatsächlichen Bedarf entsprechend geregelt werden.

Umgekehrt kann die Frischluftmenge, die im Heizraum benötigt wird, unabhängig von der Frischluftmenge, die für die Aufbereitung der Verbrennungsluft benötigt wird, geregelt werden. Gleichzeitig wird der Heizraum ständig von Abwärme entsorgt.

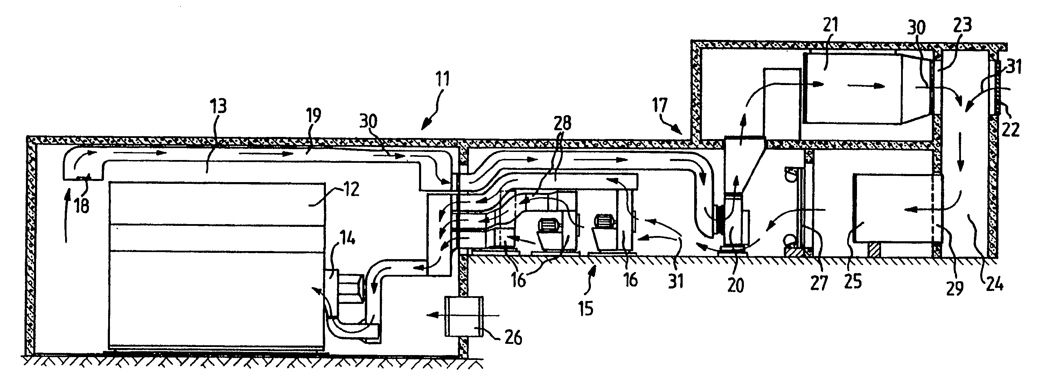

Weitere vorteilhafte Maßnahmen sind in den Unteransprüchen beschrieben. Die Erfindung ist in der beiliegenden Zeichnung dargestellt und wird nachfolgend näher beschrieben. Die einzige Figur zeigt den Schnitt durch eine Heizungsanlage mit einer Belüftungsanlage für die Verbrennungsluft und einer Heizraum-Entlüftungsanlage für die Abluftentsorgung.

Die in der Zeichnung dargestellte Heizungsanlage 11 besteht im wesentlichen aus einem oder mehreren Heizungskesseln 12, die in einem Heizraum 13 angeordnet sind. Jedem Heizungskessel 12 ist ein Brenner 14 zugeordnet, der über eine Belüftungsanlage 15 mit einem Verbrennungsluftstrom 31 versorgt wird.

Die Belüftungsanlage 15 besteht im wesentlichen aus einem oder mehreren Verbrennungsluft-Ventilatoren 16, die über Verbrennungsluftführungen 28 die Verbrennungsluft zu den Brennern 13 fördern. Die Verbrennungsluft 31 wird über einen Außenlufteintritt 22 durch einen gemeinsamen Luftschacht 24 zu dem Verbrennungslufteintritt 29 angesogen. Dem Verbrennungslufteintritt 29 ist dabei ein an sich bekannter Zuluftschalldämpfer 25 zugeordnet, um die Ansauggeräusche auf ein für die Umgebung verträgliches Maß zu dämpfen. Da die angesaugte Außenluft vielfach verunreinigt ist, ist vor dem Verbrennungsluftförderventilator ein Luftfilter 27 vorgesehen.

Die Heizraum-Entlüftungsanlage 17 besteht im wesentlichen aus einer oder mehreren Heizraumabluft-Eintrittsöffnungen 18, durch die die in dem Heizraum 13 vorgewärmte Abluft angesaugt und in Heizraum-Abluftführungen 19 mit Hilfe eines oder mehrerer Abluftventilatoren 20 abgefördert wird. Der von diesen Heizraum-Abluftventilatoren 20 abgeförderte Abluftstrom 30 wird über einen Heizraum-Abluftaustritt 23 in dem gemeinsamen Luftschacht 24 freigesetzt.

In diesem gemeinsamen Luftschacht 24 treffen die durch den Außenlufteintritt 22 angesaugte kalte Außenluft und die durch die Heizraum-Abluftführung 19 zugeförderte warme Abluft 30 aus dem Heizraum 13 zusammen. Die kalte Außenluft wird dabei mit der warmen Abluft vermischt, dadurch vorgewärmt und als vorgewärmter Verbrennungsluftstrom 31 der Belüftungsanlage 15 zugeführt. Zur Minderung der Lüftungsgeräusche der Heizraum-Entlüftungsanlage 17 ist im Bereich des Heizraum-Abluftaustritts 23 ein Abluftschalldämpfer 21 vorgesehen.

Der Heizraum 13 ist mit einem Zulufteintritt 26 versehen, durch den kalte Außenluft in den warmen Heizraum 13 eintreten kann. In dem warmen Heizraum 13 wird diese kalte Außenluft vorgewärmt und als warme Heizraum-Abluft über die Heizraumabluft-Eintrittsöffnung 18 und die Heizraum-Entlüftungsanlage 17 dem gemeinsamen Luftschacht 24 zugeführt.

Bezugszeichen

11    Heizungsanlage
12    Heizungskessel
13    Heizraum
14    Brenner
15    Belüftungsanlage
16    Verbrennungsluft-Ventilator
17    Heizraum-Entlüftungsanlage
18    Eintrittsöffnung
19    Heizraum-Abluftführung
20    Heizraum-Abluftventilator
21    Abluft-Schalldämpfer
22    Außenlufteintritt
23    Heizraum-Abluftaustritt
24    gemeinsamer Luftschacht
25    Zuluft-Schalldämpfer
26    Heizraum-Zulufteintritt
27    Luftfilter
28    Verbrennungsluftführung
29    Verbrennungslufteintritt
30    Abluftstrom
31    Verbrennungsluftstrom

**Patentansprüche**

1. Heizungsanlage (11), mit einem Heizraum (13) mit einem oder mehreren Heizungskesseln (12) mit Brennern (14), einer Heizraum-Entlüftungsanlage (17) mit einer Eintrittsöffnung (18) für die Heizraumabluft und einem Abluftaustritt (23) sowie einer Belüftungsanlage (15) mit einem Verbrennungslufteintritt (29), wobei der Heizraum (13) mit einem Zulufteintritt (26) versehen ist, dadurch gekennzeichnet, daß der Abluftaustritt (23) der Entlüftungsanlage (17) und ein Außenlufteintritt (22) durch einen gemeinsamen Luftschacht (24) mit dem Verbrennungslufteintritt (29) verbunden sind.

2. Heizungsanlage nach Anspruch 1, dadurch gekennzeichnet, daß der Heizraum-Abluftaustritt (23) ohne direkte Verbindung mit der Außenluft in dem gemeinsamen Luftschacht (24) mündet.

3. Heizungsanlage nach den Ansprüchen 1 und 2, dadurch gekennzeichnet, daß die Eintrittsöffnung (18) für den Abluftstrom (30) der Heizraum-Entlüftungsanlage (17) entfernt von dem Zulufteintritt (26) in dem Heizraum (13) liegt.

4. Heizungsanlage nach den Ansprüchen 1 bis 3, dadurch gekennzeichnet, daß der Heizraum-Abluftaustritt (23) der Heizraum-Entlüftungsanlage (17, 20) und der Verbrennungslufteintritt (29) der Belüftungsanlage (15) im Bereich des gemeinsamen Luftschachts (24) je mit einem Schalldämpfer (21, 25) versehen sind.

**Claims**

1. Heating apparatus (11), comprising a heater chamber (13) with one or more boilers (12) with burners (14), a boiler-room extraction means (17) having an intake opening (18) for the boiler-room waste air and a waste-air outlet (23), and a ventilating means (15) with a combustion-air intake (29), in wich respect the boiler room (13) is provided with an air intake (26), **characarised in that** the waste-air outlet (23) of the extraction means (17) and an ambient-air intake (22) are connected to the combustion-air intake (29) by way of a communal air flue (24).

2. Heating apparatus according to claim 1, **characterised in that** the boiler-room waste air outlet (23) terminates, without direct connection to the ambient air, in the communal air flue (24).

3. Heating apparatus according to claims 1 and 2, **characterised in that** the intake opening (18) for the waste-air stream (30) of the boiler-room extraction means (17) is located remote from the air intake (26) in the boiler room (13).

4. Heating apparatus according to claims 1 to 3, **characterised in that** the boiler-room waste air outlet (23) of the boiler-room extraction means (17, 20) and the combustion-air intake (29) of the ventilating means (16) are each provided with a muffler (21, 25) in the region of the mutual air flue (24).

**Revendications**

1. Installation de chauffage (11), avec un local de chauffage (13) équipé d'une ou plusieurs chaudières de chauffage (12) dotées de brûleurs (14), une installation d'aération du local de chauffage (17), avec une ouverture d'entrée (18) pour l'air d'évacuation du local de chauffage et une sortie d'air d'évacuation (23), ainsi qu'une installation de ventilation (15), équipée *d'une entrée d'air de combustion* (29), le local de chauffage (13) étant pourvu d'une entrée d'air d'appoint (26), caractérisée en ce que la sortie d'air d'évacuation (23) de l'installation d'aération (17) et une entrée d'air extérieur (22) sont reliées à l'entrée d'air de combustion (29), grâce à un caisson d'air commun (24).

2. Installation de chauffage selon la revendication 1, caractérisée en ce que la sortie d'air d'évacuation (23) du local de chauffage débouche dans le caisson d'air commun (24) sans liaison directe avec l'air extérieur.

3. Installation de chauffage selon les revendications 1 et 2, caractérisée en ce que l'ouverture d'entrée (18) pour le courant d'air d'évacuation (30) de l'installation d'aération de local de chauffage (17) est situé à distance de l'entrée d'air d'appoint (26) dans le local de chauffage (13).

4. Installation de chauffage selon les revendications 1 à 3, caractérisée en ce que la sortie d'air d'évacuation du local de chauffage (23) de l'installation d'aération du local de chauffage (17, 20) et l'entrée d'air de combustion (29) de l'installation d'aération (15) sont chacune pourvues d'un silencieux (21, 25) dans la zone du caisson d'air commun (24).